# EUROPÄISCHE PATENTANMELDUNG

(11) **EP 1 336 977 A2**
(43) Veröffentlichungstag der Anmeldung: **20.08.2003**
(21) Anmeldenummer: 03003157.9
(22) Anmeldetag: 18.02.2003
(51) Int. Cl.: H01H 3/20, H01H 9/28

(54) **Bedienschalter für ein Kraftfahrzeug mit einer beweglichen Schutzeinrichtung**

(30) Priorität: 19.02.2002 DE 10206939
(71) Anmelder: Methode Electronics Malta Ltd., Mriehel QRM 09 (MT)
(72) Erfinder: Galea, Alexander, Dingli RBT 11 (MT)
(74) Vertreter: Haft, von Puttkamer, Berngruber, Czybulka

(57) **Zusammenfassung**

Ein Bedienschalter (2) für ein Kraftfahrzeug ist mit einem Gehäuse (1) und einer relativ zu einem Bedienelement (7) bewegliche Schutzeinrichtung zum temporären bedienseitigen Verdecken des Bedienelementes (7) versehen. Das Gehäuse (1) weist eine bedienseitige Bedienöffnung (3) für das Bedienelement (7) auf. Die Schutzeinrichtung ist als im Gehäuse (1) geführtes, quer zur Zugangsrichtung verschiebbares, die Bedienöffnung verschließendes Schieberteil (5) ausgebildet.

Dadurch wird ein unabsichtliches Betätigen des Bedienschalters (2) erheblich erschwert.

## Beschreibung

Die Erfindung bezieht sich auf einen Bedienschalter für ein Kraftfahrzeug mit einem Gehäuse und einer relativ zu einem Bedienelement des Bedienschalters beweglichen Schutzeinrichtung zum temporären bedienseitigen Verdecken des Bedienelementes,

Ein derartiger Schalter ist z.B. durch die US4394552 A bekannt geworden, wonach ein Bedienschalter durch einen Klappdeckel gegen versehentliche Betätigung geschützt wird. Ein derartiger, aus einem Instrumentenboard vorstehender Klappdeckel ist für ein Kraftfahrzeug schon aus ästhetischen Gründen wie auch wegen der Verletzungsgefahr für die Passagiere nicht geeignet.

Derzeit ist es üblich, Automobile mit einer elektronischen Wegfahrsperre zu versehen, die durch einen nach dem Transponderprinzip arbeitenden elektronischen Schlüssel gelöst werden kann. Dadurch kann der mechanische Sicherheitsaufwand für den Anlassschalter verringert werden, der nun z.B. als separater, gut zugänglicher Drucktastenschalter ausgebildet werden kann.

Der Erfindung liegt die Aufgabe zugrunde, eine unbeabsichtigte Betätigung eines solchen Schalters unter Beachtung der ästhetischen Aspekte zu erschweren und die Verletzungsgefahr zu verringern.

Diese Aufgabe wird durch die im Kennzeichen des Anspruchs 1 angegebenen Merkmale gelöst. Das Schieberteil kann nun knapp unter der Bedienöffnung verschoben und voll in das Schaltergehäuse integriert werden. Dieses kann mit einer stabilen Lagerung und/oder Führung für das Schieberteil versehen werden, was eine Beschädigung oder gewaltsame Zerstörung der Teile erschwert. Das Schieberteil lässt sich leichter als eine Klappe in den beiden Endstellungen fixieren.

Vorteilhafte Weiterbildungen der Erfindung ergeben sich aus den in den Ansprüchen 2 bis 10 gekennzeichneten Merkmalen.

Der elektrische Antrieb nach den Ansprüchen 2 und 3 ermöglicht es, die Bedienöffnung bis zum Ankoppeln des Schlüssels fest zu verschließen. Danach kann der Schieber in Abhängigkeit vom Betriebszustand des Motors gesteuert werden, um ein Betätigen des Startknopfes bei laufendem Motor zu verhindern.

Das Schieberteil nach den Ansprüchen 4 verschließt die Bedienöffnung in der Art einer beweglichen Blende. Der darunterliegende Bedienknopf des Schalters ist lediglich in der Eindrückrichtung bewegbar.

Der gekrümmt verlaufende Schieber nach den Ansprüchen 5 und 6 stellt einen Drehschieber dar, der einen geringen Bewegungsraum benötigt und eine entsprechend schmale Bauweise des Schalters möglich macht.

Beim Bedienschalter nach den Ansprüchen 7 bis 9 ist die Schaltereinheit integraler Bestandteil des Schieberteils mit den entsprechend angeformten Wandteilen. Insbesondere bei der Weiterbildung nach Anspruch 8 ist es möglich, das Bedienelement in der geöffneten Stellung geringfügig aus dem Schaltergehäuse heraustreten zu lassen und so die Zugänglichkeit zu verbessern.

Die Weiterbildung nach Anspruch 10 macht es möglich, zusätzlich zum Hauptstromkreis des Bedienschalters weiter Stromkreise in sinnvoller Abhängigkeit von der Schieberstellung zu beschalten.

Ein Ausführungsbeispiel der Erfindung ist in der Zeichnung dargestellt und wird im folgenden näher erläutert. Es zeigen:
- Figur 1: perspektivisch eine bedienungsseitige Ansicht eines Bedienschalters mit einem Schieberteil in einer Schließstellung,
- Figur 2: den Bedienschalter nach Figur 1 in einer teilweise geöffneten Stellung des Schieberteils,
- Figur 3: den Bedienschalter nach Figur 1 in einer Öffnungsstellung des Schieberteils,
- Figur 4: einen Schnitt durch den Bedienschalter nach Figur 1,
- Figur 5: einen Schnitt durch den Bedienschalter nach Figur 3.

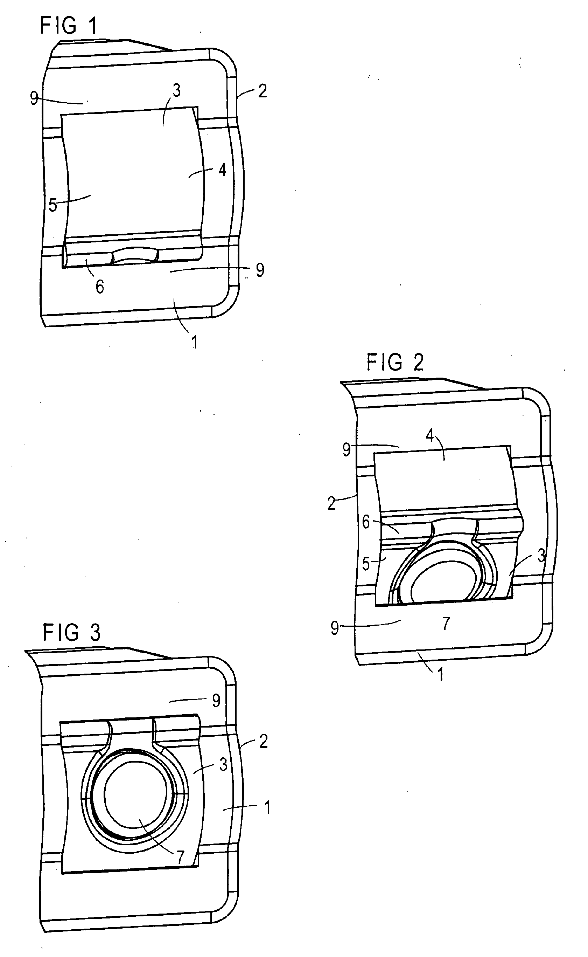

Nach Figur 1 ist ein Gehäuse 1 eines Bedienschalters 2 mit einer frontseitigen Bedienöffnung 3 versehen, die hier durch ein Wandsegment 4 eines drehbar im Gehäuse 1 gelagerten Schieberteils 5 verschlossen ist, das mit einer rippenartig nach außen abstehenden Erhebung 6 zum manuellen Betätigen des Schieberteils 5 versehen ist. Die Erhebung 6 bildet außerdem für die Bewegung des Schieberteils 5 einen Endanschlag an seitlichen, die Bedienöffnung begrenzenden Wandteilen 9 des Gehäuses 1.

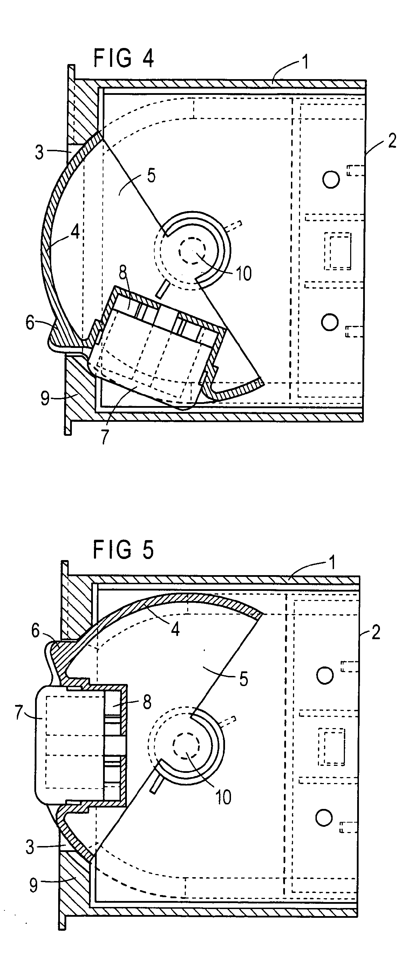

Nach Figur 2 ist das Schieberteil 5 annähernd um die halbe Länge der Bedienöffnung 3 verdreht, wobei ein knopfartiges Bedienelement 7 einer im Schieberteil 5 integrierten Schaltereinheit 8 (Fig. 4) aus einer verdeckten Stellung unter den seitlichen Wandteilen 9 des Gehäuses 1 bereits teilweise. in den Bereich der Bedienöffnung 3 gelangt ist und das Wandsegment 4 unter die gegenüberliegenden seitliche Wandteile 9 geschwenkt ist.

Nach Figur 3 ist das Schieberteil 5 mit dem Bedienelement 7 in seine Endstellung weitergeschwenkt worden, in der das Bedienelement vollständig im Bereich der Bedienöffnung liegt und für eine manuelle Betätigung voll zugänglich ist.

Figur 4 zeigt den inneren Aufbau des Bedienschalters in der Stellung des Schieberteils 5 nach Figur 1. Dieses bildet ein annähernd halbkreisförmiges Segment, das um eine Drehachse 10 des Gehäuses 1 schwenkbar ist. In diesem Segment ist die Schaltereinheit 8 mit dem nach außen weisenden Bedienelement 7 integriert, das hier vollständig von den Wandteilen 9 des Gehäuses 1 verdeckt und somit für eine Betätigung unzugänglich ist. Die Bedienöffnung 3 ist vollständig durch das Wandsegment 4 des Schieberteils 5 verschlossen.

Nach Figur 4 ist das Schieberteil 5 in die in Figur 3 gezeigte Endstellung geschwenkt, in der das Bedienelement 7 geringfügig aus der Bedienöffnung 3 herausragt und somit voll zugänglich ist. Durch Eindrücken des druckknopfartigen Bedienelements 7 kann eine Kontakt der Schaltereinheit betätigt werden, der z.B. einen Anlasser für den Motor des Kraftfahrzeugs einschaltet.

### Bezugszeichen

- 1: Gehäuse
- 2: Bedienschalter
- 3: Bedienöffnung
- 4: Wandsegment
- 5: Schieberteil
- 6: Erhebung
- 7: Bedienelement
- 8: Schaltereinheit
- 9: Wandteil
- 10: Drehachse

## Patentansprüche

1. Bedienschalter (2) für ein Kraftfahrzeug mit einem Gehäuse (1) und einer relativ zu einem Bedienelement (7) des Bedienschalters (2) beweglichen Schutzeinrichtung zum temporären bedienseitigen Verdecken des Bedienelementes (7),
**dadurch gekennzeichnet, dass** das Gehäuse (1) eine bedienseitige Bedienöffnung (3) für das Bedienelement (7) aufweist und
dass die Schutzeinrichtung als im Gehäuse (1) geführtes, quer zur Zugangsrichtung verschiebbares Schieberteil (5) zum Verschließen der Bedienöffnung ausgebildet ist.

2. Bedienschalter nach Anspruch 1,
**dadurch gekennzeichnet, dass** die Bewegung des Schieberteils (5) durch eine elektrischen Antrieb bewirkt oder blockiert werden kann.

3. Bedienschalter nach Anspruch 2,
**dadurch gekennzeichnet, dass** der Antrieb mittels eines Identifikationsschlüssels kontrollierbar ist.

4. Bedienschalter nach Anspruch 1, 2 oder 3,
**dadurch gekennzeichnet, dass** das Schieberteil als wandartiger Schieber zum Verschließen der Bedienöffnung ausgebildet ist.

5. Bedienschalter nach Anspruch 4,
**dadurch gekennzeichnet, dass** der Schieber in der Schieberichtung gekrümmt verläuft und in einer entsprechend gekrümmtem Führungsbahn des Gehäuses geführt ist.

6. Bedienschalter nach Anspruch 5,
**dadurch gekennzeichnet, dass** der Schieber im Gehäuse weitgehend versenkbar geführt ist.

7. Bedienschalter nach Anspruch 1, 2 oder 3,
**dadurch gekennzeichnet, dass** das Bedienelement (7) Teil einer im Gehäuse (1) bewegbar gelagerten, das Schieberteil (5) bildenden Schaltereinheit (8) ist und aus dem Bereich der Bedienöffnung (3) hinter stationäre Wandteile (9) des Gehäuses (1) verschiebbar ist.

8. Bedienschalter nach Anspruch 7,
**dadurch gekennzeichnet, dass** die Schaltereinheit (8) im Gehäuse (1) schwenkbar gelagert ist und
dass eine Schwenkachse (10) der Schaltereinheit (8) auf einer der Bedienöffnung (3) abgewandten Seite der Schaltereinheit (8) angeordnet ist.

9. Bedienschalter nach Anspruch 7 oder 8,
**dadurch gekennzeichnet, dass** die Schaltereinheit (8) ein Wandsegment (4) zum Verschließen der Bedienöffnung (3) in der Versenkstellung des Bedienelementes (7) aufweist.

10. Bedienschalter nach einem der vorhergehenden Ansprüche,
**dadurch gekennzeichnet, dass** der Bedienschalter (2) mit zusätzlichen elektrischen Schaltelementen ausgestattet ist, die durch die Bewegung des jeweils verschiebbaren Teils betätigbar sind.
